# FASCICULE DE BREVET EUROPEEN

(11) **EP 1 019 672 B1**
(45) Date de publication et mention de la délivrance du brevet: **08.10.2003**
(21) Numéro de dépôt: 98945376.6
(22) Date de dépôt: 25.09.1998
(51) Int. Cl.: G01C 19/56

(54) **GYROMETRE VIBRANT A EXCITATION ET DETECTION ELECTROMAGNETIQUE**
VIBRATIONSKREISEL MIT ELEKTROMAGNETISCHER ANREGUNG UND DETEKTION
VIBRATING GYROSCOPE WITH ELECTROMAGNETIC EXCITATION AND DETECTION

(30) Priorité: 30.09.1997 FR 9712129
(43) Date de publication de la demande: 19.07.2000
(73) Titulaire: DE SALABERRY, Bernard Lucien Charles, F-78000 Versailles (FR)
(72) Inventeur: DE SALABERRY, Bernard Lucien Charles, F-78000 Versailles (FR)
(74) Mandataire: de Saint-Palais, Arnaud Marie
(86) Numéro de dépôt international: FR9802060
(87) Numéro de publication internationale: WO99017078

(56) Documents cités:
- FR-A- 2 739 189
- US-A- 4 793 195

## Description

La présente invention concerne un gyromètre vibrant destiné à mesurer les vitesses angulaires avec précision, dans un grand domaine de mesure. Ce gyromètre présente l'avantage, par rapport aux techniques généralement utilisées d'être plus simple à réaliser et donc d'un faible coût tout en restant précis et d'un encombrement réduit.

Les gyromètres vibrants sont basés sur l'action des forces de Coriolis dues à une rotation imposée à des masses en mouvement.

Plusieurs modes de réalisations ont été proposés dans le passé pour réaliser un élément vibrant sensible aux vitesses angulaires.

Lé procédé le plus fréquemment utilisé consiste à faire vibrer un corps d'épreuve cylindrique ou hémisphérique, perpendiculairement à son axe et à observer le déplacement des noeuds de vibration lorsqu'il est soumis à une rotation autour dudit axe.

Les principales difficultés proviennent des moyens employés pour créer la vibration et pour la mesurer.

Les solutions proposées à ce jour pour créer la vibration sont principalement de nature électromagnétique, électrostatique ou piézo-électrique.

Les solutions électrostatiques ont le principal inconvénient de nécessiter des tensions électriques élevées et, pour être efficaces, des entrefers très faibles. Pour éviter des amorçages d'arc, l'ensemble doit être sous vide, ce qui, avec les précisions nécessaires pour les usinages, constituent des contraintes très onéreuses.

Les solutions piézo-électriques utilisent soit un cylindre, réalisé entièrement en matériau piézo-électrique, soit des petits éléments piézo-électriques rapportés, par collage le plus souvent, sur un cylindre métallique.

L'utilisation de petits éléments piézo-électriques rapportés sur un cylindre métallique permet de réduire un peu les coûts, mais les performances ne sont guère améliorées- du fait des perturbations apportées par les masses desdites céramiques, localisées sur des points particuliers du cylindre.

Une autre difficulté majeure de tontes ces solutions résidé dans le fait que les signaux de détection sont d'un niveau électrique très faible et qu'il est très difficile de les protéger des signaux d'excitation de niveau élevé et situés dans la même bande de fréquence. Pour cette raison, les moyens de détection et d'excitation des vibrations sont- généralement de nature différente et autant que possible éloignés les uns des autres.

Le brevet américain US-A-4 793 195 décrit, par exemple, un gyromètre à cylindre vibrant muni d'une détection électrostatique et excité magnétiquement à fréquence moitié de sa fréquence de vibration pour réduire ces effets.

La demande de brevet français 95/11211 (FR-A-2 739 189) décrit un gyromètre à excitation magnétique et à détection optique également bien protégée des signaux d'excitation.

La présente invention apporte une simplification à ce dernier type de gyromètre en supprimant les moyens de détection optique et en utilisant le dispositif d'excitation électromagnétique lui-même pour faire la détection. La séparation des signaux d'excitation et de détection est obtenue d'une part en utilisant une excitation à fréquence moitié et d'autre part en répartissant les polarisations et les sens de bobinages de façon à annuler les interactions entre-excitation et détection. Une variante utilisant un multiplexage permet d'améliorer encore cette séparation. La précision du gyromètre obtenu ne dépend que de la précision d'usinages mécaniques très classiques et donc peu onéreux ainsi que de paramètres électroniques aisément maîtrisables. Cette solution présente par conséquent l'avantage d'être encore plus économique.

L'invention concerne donc un gyromètre vibrant du type comportant :
- un élément vibrant mince de révolution, des moyens d'excitation permettant d'engendrer des vibrations en au moins un point de l'élément vibrant de manière à faire apparaître, sur ledit élément vibrant, une succession de noeuds et de ventres de vibrations susceptibles de se déplacer sous l'effet d'une vitesse de rotation angulaire et
- des moyens de détection desdites vibrations, disposés de manière à pouvoir détecter lesdits noeuds et/ou lesdits ventres,
caractérisé en ce que lesdits moyens d'excitation et de détection sont tous deux électromagnétiques et réalisés à l'aide d'un seul et même ensemble électromagnétique commun aux deux fonctions d'excitation et de détection.
- Le dispositif selon l'invention est défini dans la revendication indépendante 1. Les modes particuliers de réalisation de l'invention sont définis dans les revendications dépendantes 2 - 10.

Des modes de réalisation de l'invention seront décrits ci-après, à titre d'exemples non limitatifs, avec référence aux dessins annexés dans lesquels :
La figure 1 est un schéma de principe montrant le fonctionnement d'un gyromètre vibrant,
La figure 2 est une vue en coupe du gyromètre vibrant selon l'invention,
Les figures 3 et 4 sont des vues de dessus du circuit magnétique du gyromètre de la figure 2 dans quatre modes de réalisation,
La figure 5 est -un schéma de principe des circuits électroniques et éléctriques du gyromètre vibrant selon l'invention dans une version à répartition des fonctions excitation et détection dans le même ensemble excitation-détection ,
La figure 6 est un schéma de principe d'une variante des circuits électroniques et électriques de la figure 5 ,
La figure 7 est un schéma de- principe d'une variante des circuits électroniques et électriques de la figure 6 ,
La figure 8 est un schéma de principe des circuits électroniques et électriques du gyromètre vibrant selon l'invention dans la version à multiplexage des fonctions détection et excitation,
La figuré 9 est un schéma de principe d'une variante des circuits électroniques et électriques de la figure 8 et dans laquelle la polarisation est périodiquement inversée, et
La figure 10 présente deux variantes du circuit magnétique du gyromètre vibrant selon l'invention.

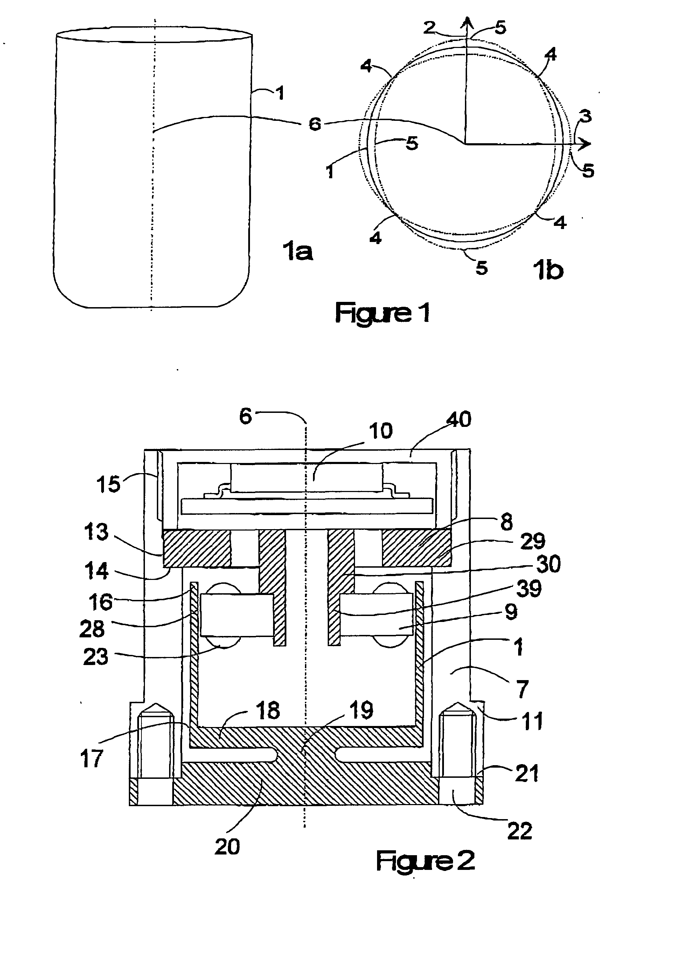

Comme précédemment mentionné, et ainsi que le montre la figure 1, un gyromètre vibrant comporte un corps d'épreuve 1, ayant un axe de symétrie 6, cylindrique par exemple, figure la, mais qui peut être plat ou avoir toute autre forme, et qui est excité en vibration, figure 1b, selon deux directions principales 2 et 3, perpendiculaires entre elles et à l'axe 6 du corps d'épreuve 1, de telle sorte qu'il apparaisse quatre noeuds 4 et quatre ventres 5 de vibrations, les déplacements des parties situées sur les ventres de vibrations étant en opposition de phase pour les deux directions principales d'excitation 2 et 3.

Lorsque le corps d'épreuve 1 est soumis à une rotation autour d'un axe perpendiculaire aux deux directions principales d'excitation 2 et 3, les noeuds de vibrations ne tournent pas avec le corps d'épreuve. Ils ne restent pas non plus fixes dans l'espace, mais ils tournent à une vitesse angulaire qui est une fraction de la vitesse angulaire du corps d'épreuve. Le rapport entre les vitesses angulaires du corps d'épreuve et des noeuds de vibration dépend de la géométrie du corps d'épreuve.

Les noeuds de vibration 4 ne sont donc pas liés au corps d'épreuve 1, mais se déplacent, par rapport à celui-ci, avec une vitesse angulaire proportionnelle à la vitesse angulaire du corps d'épreuve lui-même.

On conçoit donc que, pour réaliser un gyromètre capable de mesurer une vitesse angulaire, il faille résoudre deux problèmes qui sont d'une part l'excitation en vibration et d'autre part la détection de la position des noeuds de vibration par rapport à une référence liée au corps d'épreuve.

La figure 2 montre en vue en coupe une réalisation préférée du gyromètre vibrant selon l'invention, apte à résoudre ces deux problèmes de façon économique.

Celui-ci comporte :
- un boîtier extérieur cylindrique 7,
- un corps d'épreuve ou cylindre vibrant 1,
- un support d'excitation-détection 8,
- un excitateur détecteur magnétique ou stator 9,
- un circuit électronique 10,
- des moyens de fixation, de câblage et de fermeture.

Le boîtier extérieur 7, de formé cylindrique ouverte, comporte, à l'une de ses extrémités, une surépaisseur 11 dans laquelle sont aménagée des trous de fixation pour le corps d'épreuve 1.

L'autre -extrémité du boîtier extérieur comporte, intérieurement, une partie munie d'un alésage 13 d'un diamètre un peu supérieur au diamètre intérieur du reste du boîtier, ledit alésage étant raccordé à l'intérieur du cylindre 7 par un lamage circulaire 14. Cet alésage 13 est prolongé, du côté de l'extrémité du boîtier par un taraudage 15.

Le corps d'épreuve est réalisé sous forme d'un cylindre vibrant 1 à paroi mince, ayant un axe de symétrie 6, ouvert à l'une de ses extrémités 16 et fermé à son autre extrémité 17 par une paroi de préférence plus épaisse que. celles du cylindre lui-même et formant un fond 18.

Ledit fond 18 est lui-même fixé en son centre, par un pied 19, sur une plaque 20 circulaire et qui comporte un lamage de centrage 21 ainsi que des trous de fixation 22 sur sa périphérie.

Le support d'excitation-détection 8, de révolution, comporte une première partie 29 dont. le diamètre est tel qu'il puisse être centré et appuyé sur le lamage 14 dans l'alésage 13 du boîtier extérieur 7 et une seconde partie comportant deux diamètres successifs décroissants 30 et 39, dont le second est destiné à servir de support au stator magnétique 9 sur lequel sont placés des bobinages.

Ce support 8 vient donc prendre place dans l'alésage 13 du boîtier 7 et repose sur le lamage 14.

Il est dimensionné de telle sorte que le stator 9 se trouve placé centré dans l'extrémité ouverte 16 du cylindre 1 en ménageant un entrefer 28 d'épaisseur aussi réduite que possible.

Un écrou à filetage extérieur 40, vissé dans le taraudage 15, vient serrer et fixer la partie 29 du support 8 sur le lamage 14 du boîtier 7.

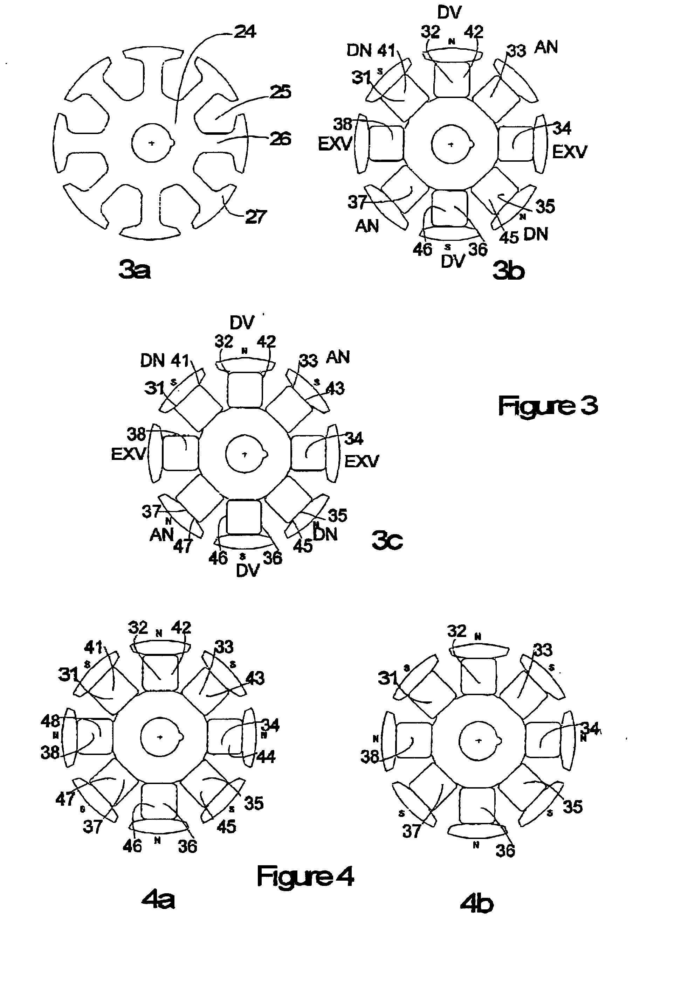

L'excitateur magnétique est de préférence réalisé en utilisant, figure 3a, des tôles 24 du genre de celles employées pour les rotors bobinés de moteurs électriques. Plusieurs de ces tôles 24 sont empilées pour constituer un stator 9 d'un diamètre légèrement inférieur au diamètre intérieur du cylindre vibrant 1. Ce stator comporte des encoches 25 séparant des dents 26 autour desquelles sont placées des bobinages électriques. Le nombre de ces dents doit être multiple de quatre. Dans le cas de quatre dents, celles-ci doivent- faire entre elles un angle multiple de 45 degrés, les deux premières dents faisant entre elles un angle multiple impair de 45 degrés et les deux autres dents faisant également un angle multiple impair de 45 degrés. Dans le cas de la variante utilisant le multiplexage, lé nombre de dents peut être réduit à deux dents faisant entre elle un angle multiple impair de 45 degrés. Dans une réalisation préférée de l'invention, les dents 26 sont au. nombre de huit, réparties tous les 45 degrés. Elles sont relativement étroites et prolongées par huit masses polaires 27.

Les bobinages 23 sont constitués, figure 3b, d'au moins quatre et de préférence huit bobines 31 à 38 de fil conducteur isolé, chacune entourant l'une des dents 26 du stator.

Ces bobines 31 à 38 servent à l'excitation et à la détection.

Dans un premier mode de réalisation de l'invention, elles remplissent deux par deux les fonctions suivantes :
- Excitation de la vibration, EXV,
- Détection de la position des ventres de vibration, DV,
- Détection de la position des noeuds de vibration, DN,
- Asservissement de la position des noeuds, AN.

Les fonctions EXV et DV sont réalisées par des bobines de même rang, pair par exemple, les fonctions DN et AN étant alors remplies par les bobines de rang impair.

Les deux bobines d'une même fonction peuvent être placées à 90 ou 180 degrés l'une de l'autre. Il est préférable, pour minimiser les diaphonies des fonctions excitation EXV et Asservissement AN vers les fonctions de détection respectivement DN et DV, de placer les bobines d'une même fonction à 180 degrés l'une de l'autre suivant par exemple la répartition du tableau ci-dessous. La première bobine de chaque paire, 31 à 34, étant par convention réalisée dans un sens positif, le sens de branchement de la deuxième bobine de chaque paire, 35 à 38, est indiquée par la troisième ligne du tableau.

| | | | | | | | | |
|---|---|---|---|---|---|---|---|---|
| N° bobine | 31 | 32 | 33 | 34 | 35 | 36 | 37 | 38 |
| Positions 1 | DN | DV | AN | EXV | DN | DV | AN | EXV |
| Sens de bobinage | + | + | + | + | - | - | - | + |

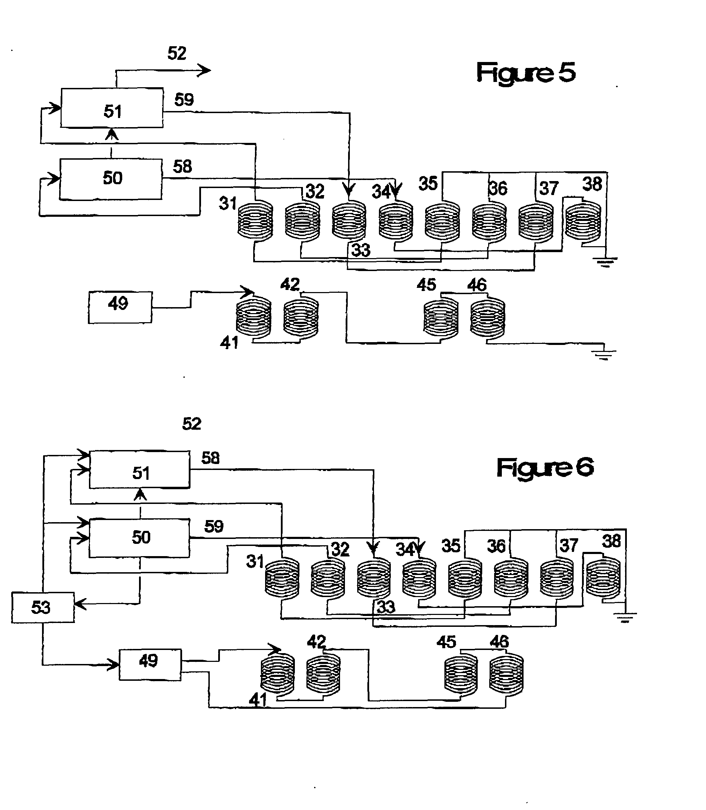

Pour compléter le dispositif, quatre bobines 41, 42, 45 et 46 sont placées sur les mêmes dents que les bobines-respectivement 31, 32, 35 et 36. Ces bobines sont branchées de telle sorte que le courant provenant d'une source de courant 49, figure 5, circule dans le même sens pour les bobines 41 et 46 et en sens inverse pour les bobines 42 et 45, afin qu'il apparaisse des pôles nord, par exemple, sur les dents portant les bobines 41 et 46 et sud sur les dents portant les bobines 42 et 45, figure 3b. A noter que la polarisation résiduelle des quatre dents portant les bobines 33,34,37 et 38 peut être supprimée par des bobines supplémentaires non représentée sur la figure 3b.

Cette disposition crée une diaphonie importante entre l'excitation des vibrations et la détection des dites vibrations. Cette diaphonie pourrait perturber l'électronique, c'est pourquoi il est préférable d'exciter les vibrations en utilisant une fréquence moitié de la fréquence propre du cylindre vibrant 1. Ce type d'excitation permet de filtrer la diaphonie à fréquence moitié en démodulant les signaux de détection en fonction de la fréquence propre du cylindre vibrant. Le même procédé également prévu, dans le cas de la figure 3b, pour l'asservissement des noeuds présente l'inconvénient d'être non linéaire, il est préférable de faire l'asservissement des noeuds en utilisant une modulation à la fréquence propre du cylindre. A cet effet, une polarisation doit être introduite sur les dents correspondantes AN à l'aide de deux bobines 43 et 47, de façon à y faire apparaître un pôle sud et un pôle nord, figure 3c.

A ce gyromètre est associée une électronique d'excitation et d'asservissement dont les principes sont bien connus.

La figure 5 présente une première variante des branchements de cette électronique dans laquelle excitation et asservissement sont fait à fréquence moitié de la fréquence propre du cylindre vibrant. Elle comprend un circuit d'excitation 50 et un circuit d'asservissement 51.

Le circuit d'excitation 50 comporte un oscillateur à bouclage de phase suivi d'un diviseur de fréquence par deux. Les signaux 59, à fréquence moitié, issus de ce diviseur, commandent les bobines non polarisées EXV, 34 et 38. Le cylindre est ainsi excité à la fréquence de l'oscillateur. Lorsque cette fréquence est égale à la fréquence propre du cylindre, celui-ci vibre et induit des signaux sur les bobines de détection des vibrations DV, 32 et 36. Ces signaux sont renvoyés à l'entrée de l'oscillateur dudit circuit d'excitation 50 et servent, grâce à un bouclage de phase, à en asservir la fréquence à la fréquence propre du cylindre vibrant.

Le circuit d'asservissement 51 reçoit les signaux issus -des bobines de détection des noeuds de vibration DN 31 et 35, les démodule et les remodule à fréquence moitié. Les signaux remodulés 59 commandent les bobines d'asservissement des noeuds AN 33 et 37 de façon à asservir la position desdits noeuds à rester fixe, au droit des dents portante lesdites bobines 31, 33, 35 et 37. Le signal démodulé, passé dans un correcteur quadratique, est envoyé sur la sortie 52 et représente la vitesse angulaire mesurée par le gyromètre.

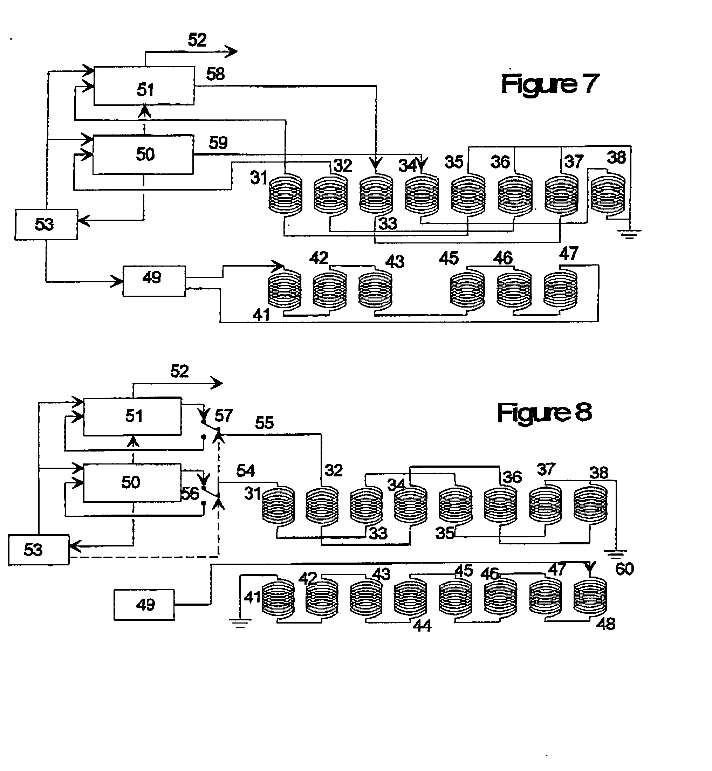

Pour éviter des dérives dues à l'hystérésis des matériaux, il est intéressant de changer périodiquement le signe de la polarisation des bobines de détection. A cet effet, comme le montre la figure 6, un séquenceur 53 commande, dans le générateur de courant 49, l'inversion périodique du courant dans les bobines 41, 42, 45 et 46 et commande en même temps l'inversion de phase du bouclage de l'oscillateur du circuit d'excitation 50 et l'inversion de phase de la démodulation des signaux de détection des noeuds dans le circuit d'asservissement 51. La fréquence de l'inversion est choisie pour être de préférence un sous-multiple de la fréquence de l'oscillateur. Le séquenceur est donc dans ce cas synchronisé par l'oscillateur lui-même.

La figure 7 présente une variante de l'électronique de la figure 6 adaptée à la configuration de la figure 3c et dans laquelle le circuit d'asservissement 51 remodule le signal à la fréquence propre du cylindre vibrant. Les dents utilisées pour cet asservissement sont polarisées par les bobines 43 et 47, alimentées par le générateur de courant 49 et mise en série avec les bobines 41, 42, 45 et 46. Dans ce cas, le correcteur quadratique est supprime et le signal démodulé par le circuit d'asservissement 51 est envoyé directement à la sortie 52 pour représenter la vitesse angulaire du gyromètre.

Dans une version plus sophistiquée de l'électronique, et pour éviter tout problème de diaphonie entre excitation et détection, une technique de multiplexage est utilisée, figure 8.

Dans cette solution, les bobinages sont tour à tour utilisés pour exciter, puis pour détecter les vibrations et la position des noeuds.

Les bobinages sont alors constitués, figure 4a, de huit paires de bobines 31 à 38 et 41 à 48, chaque paire, 31 et 41 par exemple, entourant l'une des dents 26 du stator, lesdits bobinages de chaque paire étant superposés ou placés côte à côte.

L'une des bobines de chaque paire, 41 à 48 par exemple, sert à la polarisation du stator. Elles sont branchées de telle sorte que le courant provenant de la source de courant, figure 7, circule dans le même sens pour les bobines de rang pair et en sens inverse pour les bobines de rang impair, de telle sorte qu'il apparaisse des pôles nord et sud alternés sur chacune des masses polaires 27, figure 4a.

Les bobines 31 à 38 servent à la détection et à l'excitation des vibrations du cylindre vibrant. Elles sont branchées en série, quatre par quatre, les bobines de rang pair 32, 34, 36 et 38 ensembles et les bobines de rang impair 31, 33, 35 et 37 ensembles. Le sens de branchement de chaque bobine étant tel que les signaux de deux bobines, situées à 90 degrés l'une de l'autre, se soustraient et que par conséquent les signaux de deux bobines opposées s'additionnent.

Une des extrémités de chacun de ces ensembles de quatre bobines est reliée à une masse 60, les deux autres extrémités 54 et 55 sont envoyées à deux inverseurs 56 et 57 commandés par le séquenceur 53. Ces inverseurs 56 et 57 commutent lesdites extrémités 54 et 55 alternativement sur les entrées et les sorties respectivement du circuit d'excitation 50 et du circuit d'asservissement 51. Le séquenceur 53 commande le fonctionnement de ces deux circuits en fonction de la position desdits inverseurs 54 et 55.

La fréquence de fonctionnement du séquenceur est un sous multiple de la fréquence propre du cylindre vibrant 1. Le rapport cyclique de la commutation entre le temps de d'excitation et le temps de détection peut être de 1/1. Il peut également avantageusement être de 1/2, 1/3, 1/4 ou plus faible encore, ceci en fonction de la surtension du cylindre vibrant. Les commutations de la fonction excitation à la fonction détection sont effectuées de préférence au moment du passage par zéro du courant dans les bobinés 31 à 38. Les commutations de la fonction détection à la fonction excitation sont effectuées de préférence au moment du passage par zéro de la sinusoïde de commande du courant dans lesdites bobines.

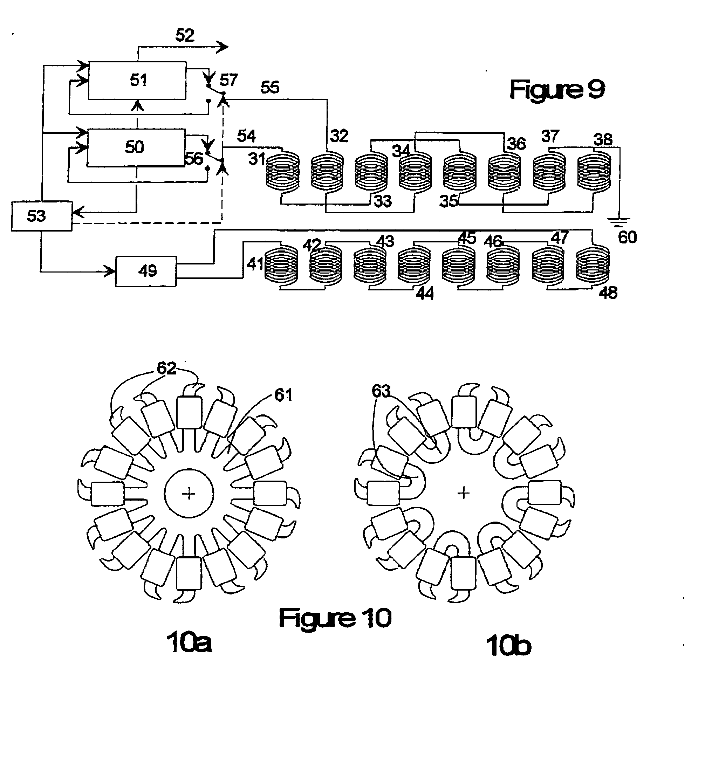

Dans cette solution, et également pour éviter les dérives dues à l'hystérésis des matériaux, le courant dans les bobines de polarisation peut être inversé périodiquement. Dans ce cas, le séquenceur 53, figure 9, commande, dans le générateur de courant 49, l'inversion périodique des bobines 41 à 48 et commande en même temps les phases de démodulation et de modulation du circuit d'asservissement 51 ainsi que les phases du bouclage de l'oscillateur et de l'excitation des vibrations du circuit d'excitation 50.

Enfin une dernière variante de l'invention, figure 4b, peut être réalisée en remplaçant les tôles du stator par un matériau formant aimant permanent et aimanté de façon à faire apparaître une même répartition de pôles nord et sud que celle de la figure 4a. Dans ce cas, les bobines 41 à 48 ainsi que le circuit de d'alimentation en courant 49 sont supprimés.

A noter que, dans les variantes multiplexées, figures 4, 8 et 9, le stator peut être réduit à 4 dents ou même à deux dents pourvu que deux au moins de ces dents fassent entre elles un angle de 45 degrés.

A noter encore que, surtout dans le cas d'une électronique non multiplexée, l'utilisation d'un stator à seize dents, ayant de préférence des masses polaires 61 dissymétriques deux à deux, ainsi que le montre la figure 10a peut permettre de réduire les phénomènes de diaphonie sans sortir du cadre de l'invention. La séparation des voies de détection et d'excitation peut encore être accentuée en séparant les 16 dents en huit circuits magnétiques élémentaires, figure 10b. Dans ces deux cas, les 16 bobines de polarisation d'une part et d'excitation ou de détection d'autre part peuvent être placées sur chacune des 16 dents, ou mieux séparées elles-mêmes en deux et placées deux par deux sur chacune des dents. Dans cette configuration, et pour simplifier le gyromètre, il est possible de n'utiliser que deux circuits magnétiques élémentaires dans une variante à électronique multipléxée. Quatre circuits magnétiques élémentaires sont nécessaires dans la version utilisant la division de fréquence.

A noter encore que dans toutes les variantes de l'invention décrites ci-dessus, les bobines mises en série peuvent être mise en parallèle ou encore utilisées séparément ou par paire de façon à assurer des redondances par exemple.

A noter enfin que l'ensemble du dispositif d'excitation et de détection peut être appliqué, en adaptant sa forme, à toute autre forme de corps vibrant, sans sortir du cadre de l'invention telle que revendiquée dans les revendications 1 - 10.

## Revendications

1. Gyromètre vibrant du type comportant
- un élément vibrant mince de révolution (1),
- des moyens d'excitation (8) permettant d'engendrer des vibrations en au moins un point (5) de l'élément vibrant (1) de manière à faire apparaître, sur ledit élément vibrant, une succession de noeuds (4) et de ventres (5) de vibrations susceptibles de se déplacer sous l'effet d'une vitesse de rotation angulaire et
- des moyens de détection desdites vibrations, disposés de manière à pouvoir détecter lesdits noeuds et/ou lesdits ventres,
**caractérisé en ce que** lesdits moyens d'excitation et de détection sont tous deux électromagnétiques et réalisés à l'aide d'un seul et même ensemble électromagnétique commun aux deux fonctions d'excitation et de détection.

2. Gyromètre vibrant selon la revendication 1,
**caractérisé en ce qu'**il comporte un élément vibrant sensiblement cylindrique, constituant un cylindre vibrant (1), ayant une extrémité ouverte (16) à l'intérieur de laquelle est placé un stator magnétique (9) composés de tôles magnétiques (24) ayant un nombre de dents (26) multiple de quatre, terminées par des masses polaires (27), lesdites dents étant entourées par des bobines de fils conducteurs isolés, chacune des dents remplissant l'une des quatre fonctions excitation des vibrations, détection des ventres de vibration, détection des noeuds de vibration et asservissement des noeuds de vibration.

3. Gyromètre vibrant selon une des revendications 1 et 2,
**caractérisé en ce que** le stator électromagnétique comporte huit dents entourées de bobinages remplissant par paire l'une des quatre fonctions excitation des vibrations, détection des ventres de vibration, détection des noeuds de vibration et asservissement des noeuds de vibration.

4. Gyromètre vibrant selon une des revendications 1, 2 et 3
**caractérisé en ce que** les deux dents de chaque paire de dents sont placées à 180 degrés l'une de l'autre, les paires de dents remplissant les fonctions excitation des vibrations et détection des ventres de vibration, étant placées à 90 degrés l'une de l'autre et à 45 degrés des deux autres paires remplissant les fonctions de détection et d'asservissement, des noeuds de vibration et **en ce que** les dents des fonctions détection des ventres de vibration et détection des noeuds de vibration sont polarisées à l'aide de bobinages supplémentaires (41, 42, 43 et 46) alimentés en courant par un générateur de courant (49).

5. Gyromètre vibrant selon la revendication 1,
**caractérisé en ce qu'**il comporte un élément vibrant sensiblement cylindrique, constituant un cylindre vibrant (1), ayant une extrémité ouverte (16) à l'intérieur de laquelle est placé un stator magnétique (9) composés de tôles magnétiques (24) ayant un nombre de dents (26) multiple de deux, deux au moins faisant entre elles un angle multiple impair de 45°, terminées par des masses polaires (27), lesdites dents étant entourées par des bobines de fils conducteurs isolés, chacune des dents remplissant soit une fonction d'excitation des vibrations et une fonction de détection des ventres de vibration, soit une fonction de détection des noeuds de vibration et une fonction d'asservissement des noeuds de vibration et **en ce que** lesdites bobines de fils conducteurs isolés sont reliées alternativement et périodiquement à l'entrée puis à la sortie d'un oscillateur à bouclage de phase (50) d'une part, à l'entrée puis à la sortie d'un circuit d'asservissement des noeuds de vibration (51) d'autre part.

6. Gyromètre vibrant selon la revendication 5,
**caractérisé en ce que** le stator d'excitation et détection (9) comporte huit dents munies chacune de deux bobines, (31 et 41, 32 et 42,...., 38 et 48), huit de ces bobines (41 à 48) étant reliées en série et alimentées par un générateur de courant (49), quatre autres bobines placées sur des dents situées à 90° l'une de l'autre (31, 33, 35 et 37), reliées en série d'une part et alternativement et périodiquement d'autre part, soit à l'entrée, soit à la sortie d'un oscillateur à bouclage de phase (50), les quatre dernières bobines (32, 34, 36 et 38), placées sur les quatre dents situées à 45° des précédentes, étant reliées également en série d'une part et alternativement et périodiquement d'autre part, soit à l'entrée, soit à la sortie d'un circuit d'asservissement des noeuds de vibration (51).

7. Gyromètre vibrant selon une des revendications 4 et 6, **caractérisé en ce que** le courant traversant les bobines de polarisation est inversé périodiquement.

8. Gyromètre vibrant selon une des revendications 1, 5 et 6, **caractérisé en ce que** le stator est constitué par un matériaux magnétique aimanté de façon permanente.

9. Gyromètre vibrant selon l'une des revendications 1, 2 et 4, **caractérisé en ce que** le stator comporte au moins deux paires de dents dissymétriques.

10. Gyrometre vibrant selon l'une des revendications 1, 2, 4 et 9
**caractérisé en ce que** le matériau magnétique du stator est scindé en au moins deux sous-ensembles comportant chacun au moins deux dents.

## Patentansprüche

1. Schwinggyrometer der Art mit:
- einem dünnwandigen Rotationschwingelement (1),
- Erregungsmitteln (8), die es gestatten, Schwingungen an zumindest einem Punkt (5) des Schwingelements (1) zu erzeugen, so dass auf dem Schwingelement eine Folge von Schwingungsknoten (4) und -bäuchen (5) auftritt, die sich unter der Wirkung einer Winkelgeschwindigkeit verschieben können, und
- Mittel zum Erfassen der Schwingungen, die so angeordnet sind, dass sie die Knoten und/oder die Bäuche erfassen können,
**dadurch gekennzeichnet, dass** die Erregungs- und Erfassungsmittel beide elektromagnetisch sind und mittels ein und derselben elektromagnetischen Einheit ausgeführt sind, die den beiden Funktionen der Erregung und der Erfassung gemeinsam ist.

2. Schwinggyrometer nach Anspruch 1,
**dadurch gekennzeichnet, dass** es ein im Wesentlichen zylindrisches Schwingelement umfasst, das einen Schwingzylinder (1) bildet, der ein offenes Ende (16) aufweist, in dessen Innerem ein magnetischer Stator (9) platziert ist, der aus magnetischen Blechen (24) mit einer Anzahl von Zinken (26), die ein Vielfaches von Vier ist, besteht, die in Polmassen (27) enden, wobei die Zinken von Spulen aus isolierten Leitungsdrähten umgeben sind und wobei jeder der Zinken eine der vier Funktionen Erregung der Schwingungen, Erfassung der Schwingungsbäuche, Erfassung der Schwingungsknoten und Regelung der Schwingungsknoten erfüllt.

3. Schwinggyrometer nach einem der Ansprüche 1 und 2,
**dadurch gekennzeichnet, dass** der elektromagnetische Stator acht Zinken umfasst, die von Spulen umgeben sind, die paarweise eine der vier Funktionen Erregung der Schwingungen, Erfassung der Schwingungsbäuche, Erfassung der Schwingungsknoten und Regelung der Schwingungsknoten erfüllen.

4. Schwinggyrometer nach einem der Ansprüche 1, 2 und 3,
**dadurch gekennzeichnet, dass** die zwei Zinken jedes Zinkenpaares in 180 Grad zueinander platziert sind, wobei die Zinkenpaare, die die Funktionen der Erregung der Schwingungen und der Erfassung der Schwingungsbäuche erfüllen, in 90 Grad zueinander und in 45 Grad zu den zwei anderen Paaren platziert sind, die die Funktionen der Erfassung und Regelung der Schwingungsknoten erfüllen, und dass die Zinken für die Funktionen der Erfassung der Schwingungsbäuche und der Erfassung der Schwingungsknoten mittels Hilfsspulen (41, 42, 43 und 46) polarisiert werden, die von einer Stromquelle (49) mit Strom versorgt werden.

5. Schwinggyrometer nach Anspruch 1,
**dadurch gekennzeichnet, dass** er ein im Wesentlichen zylindrisches Schwingelement umfasst, das einen Schwingzylinder (1) bildet, der ein offenes Ende (16) aufweist, in dessen Innerem ein magnetischer Stator (9) platziert ist, der aus magnetischen Blechen (24) mit einer Anzahl von Zinken (26), die ein Vielfaches von Zwei ist, besteht, wobei zumindest zwei einen Winkel von einem ungeraden Vielfachen von 45° miteinander bilden, die in Polmassen (27) enden, wobei die Zinken von Spulen aus isolierten Leitungsdrähten umgeben sind, wobei jeder der Zinken entweder die Funktion der Erregung der Schwingungen und eine Funktion der Erfassung der Schwingungsbäuche, oder eine Funktion der Erfassung der Schwingungsknoten und eine Funktion der Regelung der Schwingungsknoten erfüllt, und dass die Spulen aus isolierten Leitungsdrähten abwechselnd und periodisch einerseits mit dem Eingang und dann dem Ausgang eines phasengeregelten Oszillators (50) und andererseits dem Eingang und dann mit dem Ausgang eines Regelkreises für die Schwingungsknoten (51) verbunden werden.

6. Schwinggyrometer nach Anspruch 5,
**dadurch gekennzeichnet, dass** der Erregungs- und Erfassungsstator (9) acht Zinken umfasst, die jeweils mit zwei Spulen (31 und 41, 32 und 42,...., 38 und 48) versehen sind, wobei acht dieser Spulen (41 bis 48) in Reihe verbunden sind und durch eine Stromquelle (49) gespeist werden, wobei vier andere Spulen auf Zinken platziert sind, die in 90° zueinander liegen (31, 33, 35 und 37), die in Reihe einerseits in Reihe und andererseits abwechselnd und periodisch entweder mit dem Eingang oder dem Ausgang eines phasengeregelten Oszillators (50) verbunden werden, wobei die vier letzten Spulen (32, 34, 36 Unternehmen 38), die auf den vier Zinken platziert sind, die in 45° zu den vorhergehenden liegen, ebenso einerseits in Reihe und andererseits abwechselnd und periodisch mit dem Eingang oder dem Ausgang eines Regelkreises für die Schwingungsknoten (51) verbunden werden.

7. Schwinggyrometer nach einem der Ansprüche 4 und 6,
**dadurch gekennzeichnet, dass** der die Polarisierungsspulen durchlaufende Strom periodisch umgedreht wird.

8. Schwinggyrometer nach einem der Ansprüche 1, 5 und 6, **dadurch gekennzeichnet, dass** der Stator aus einem permanentmagnetischen Material bestseht.

9. Schwinggyrometer nach einem der Ansprüche 1, 2 und 4,
**dadurch gekennzeichnet, dass** der Stator zumindest zwei Paare asymmetrischer Zinken umfasst.

10. Schwinggyrometer nach einem der Ansprüche 1, 2, 4 und 9,
**dadurch gekennzeichnet, dass** das magnetische Material des Stators auf zumindest zwei Untereinheiten aufgeteilt ist, die jeweils zumindest zwei Zinken umfassen.

## Claims

1. Vibrating gyroscope of the type comprising
- a thin vibrating element generated by revolution (1),
- an excitation means (8) enabling the generation of vibrations at at least one point (5) of the vibrating element (1) so as to cause to appear, on said vibrating element, a succession of vibration nodes (4) and bulges (5) susceptible of moving under the effects of an angular speed of rotation, and
- a means for detecting said vibrations, disposed so as to be able to detect said nodes and/or said bulges,
**characterized in that** said excitation and detection means are both electromagnetic and made from the same electromagnetic assembly common to both the excitation and detection functions.

2. Vibrating gyroscope according to claim 1,
**characterised in that** it comprises a substantially cylindrical vibrating element, constituting a vibrating cylinder (1), having an open end (16) inside which is placed a magnetic stator (9) comprised of magnetic sheets of metal (24) having a number of teeth (26) that is a multiple of four, ended by polar masses (27), said teeth being surrounded by coils of insulated conducting wire, each of the teeth fulfilling one of the functions of excitation of the vibrations, detection of the vibration bulges, detection of the vibration nodes and automatic control of the vibration nodes.

3. Vibrating gyroscope according to one of claims 1 and 2,
**characterised in that** the electromagnetic stator comprises eight teeth surrounded by windings fulfilling by pairs one of the four functions of excitation of the vibrations, detection of the vibration bulges, detection of the vibration nodes and automatic control of the vibration nodes.

4. Vibrating gyroscope according to one of claims 1, 2 and 3,
**characterised in that** the two teeth of each pair of teeth are placed at an angle of 180 degrees from one another, the pairs of teeth fulfilling the functions of excitation of the vibrations and detection of the vibration bulges being positioned at an angle of 90 degrees from one another and at 45 degrees from the two other pairs fulfilling the functions of detection and automatic control of the vibration nodes, and **in that** the teeth of the vibration bulge detection and vibration node detection functions are polarised by means of additional windings (41, 42, 43 and 46) supplied with current by a current generator (49).

5. Vibrating gyroscope according to claim 1,
**characterised in that** it comprises a substantially cylindrical vibrating element, constituting a vibrating cylinder (1), having an open end (16) inside which is placed a magnetic stator (9) comprised of magnetic sheets of metal (24) having a number of teeth (26) that is a multiple of two, of which two at least form an angle which is an odd-numbered multiple of 45 degrees, ended by polar masses (27), said teeth being surrounded by coils of insulated conducting wire, each of the teeth fulfilling either a vibration excitation function and a vibration bulge detection function, or a vibration node detection function and a vibration node automatic control function, and **in that** said coils of insulated conducting wire are alternately and periodically connected, on the one hand, to the input and then to the output of a phase looping oscillator (50), and, on the other hand, to the input and then to the output of a vibration node automatic control circuit (51).

6. Vibrating gyroscope according to claim 5,
**characterised in that** the excitation and detection stator (9) comprises eight teeth each fitted with two coils (31 and 41, 32 and 42, ....., 38 and 48), eight of these coils (41 to 48) being serially connected and supplied by a current generator (49), four other coils being placed on the teeth situated at 90 degrees from one another (31, 33, 35 and 37), connected serially, on the one hand, and alternately and periodically, on the other hand, either to the input, or to the output of a phase looping oscillator (50), the last four coils (32, 34, 36 and 38) being placed on the four teeth situated at 45 degrees from the previous teeth, also connected serially, on the one hand, and alternately and periodically, on the other hand, either to the input or to the output of a vibration node automatic control circuit (51).

7. Vibrating gyroscope according to one of claims 4 and 6,
**characterised in that** the current passing through the polarisation coils is periodically reversed.

8. Vibrating gyroscope according to one of claims 1, 5 and 6,
**characterised in that** the stator is comprised of a permanently magnetised magnetic material.

9. Vibrating gyroscope according to one of claims 1, 2 and 4,
**characterised in that** the stator comprises at least two pairs of dissymmetrical teeth.

10. Vibrating gyroscope according to one of claims 1, 2, 4 and 9,
**characterised in that** the magnetic material of the stator is split into at least two sub-assemblies each comprising at least two teeth.
